# EUROPEAN PATENT APPLICATION

(11) **EP 3 400 992 A1**
(43) Date of publication of application: **14.11.2018**
(21) Application number: 17170014.9
(22) Date of filing: 08.05.2017
(51) Int. Cl.: A63F 13/216, A63F 13/27, A63F 13/323, A63F 13/327, A63F 13/352, A63F 13/92, A63F 13/30, A63F 13/45, A63F 13/52

(54) **PROVIDING A LOCATION-BASED MIXED-REALITY EXPERIENCE**

(71) Applicant: Trimoo IP Europe B.V., 1016 DW Amsterdam (NL)
(72) Inventor: Makdessi, Riad, 1016 DW Amsterdam (NL)
(74) Representative: De Vries & Metman

(57) **Abstract**

A method of processing location information by server system of a game system is described. The game system is adapted to provide a location-based mixed-reality experience, the game system comprising a physical game space divided in game rooms and transporter simulators, each transporter simulator being configured to provide players wearing a mobile client device access to game rooms, the game rooms and the transport simulators comprising sensors, actuators and/or media players controlled by the server system, the server system and the mobile client devices being configured to determine a mixed-reality (MR) map representing the game rooms in a virtual-world and the position of at least one mobile client device on the MR map; the method comprising:
the server system updating the MR map on the basis of real-world location information of a mobile client device moving through a first game room; the server system receiving a request of the mobile client device to access a transport simulator connected to the first game room and to start a transport simulation process to provide the player wearing the client device a mixed reality experience of a transportation from the first game room through the virtual-world to a second game room; and, the server system determining virtual-world location information representing the position of the client device in the virtual-world during the transport simulation from the first game room to the second game room and updating the mixed-reality map on the basis of virtual-world location information during the execution of the transport simulation process.

## Description

### Field of the invention

The invention relates to providing a location-based mixed-reality experience, and, in particular, though not exclusively, to systems and methods for providing a location-based mixed-reality experience, a client device and server device for providing a location-based mixed-reality experience and a computer program product for using such method.

### Background of the invention

With the arrival of virtual reality and augmented reality new types of media experiences are developed which can be used to enhance the experiences offered in a theme park or a gaming venue. The experiences provided in the prior art system are however still quite limited and do not provide the experience of immersion, i.e. a perception by a player of being physically present in which the physical and virtual-world are blended into a mixed reality world.

For example, EP2189200 describes a system for enhancing the experience of a traditional theme park attraction, e.g. a roller coaster experience, using computer-based visual effects and simulations. When a cart of a roller coaster moves through a known path in the real world, a person in the cart is provided with augmented reality effects in which visual information is projected over the real physical world using e.g. a head-up display. There is no interaction possible with the virtual objects and the enhancement is limited to the attraction. Once the ride is over, the experience is over.

Another way of enhancing the physical world are described in US8968099. This document describes a so-called parallel reality location-based game known as Pokémon Go^{®} in which players can use their mobile phone to access a virtual-world that is "parallel" to the real world. In this scheme, the coordinates of the real-world are used to augment the real world with virtual objects, which are can be viewed by watching a scene through a camera of a mobile device. The described platform allows e.g. players that are in close range of each other in the real-world to transfer of a virtual object. Similarly, virtual objects can be transported using a transport carrier, e.g. a train, in the real world. The problem with the parallel reality location-based scheme is that it only enhances the real world with virtual objects at certain locations. The platform only provides limited possibilities in terms of enhancement and interaction so that a true feeling of mixed-reality cannot be provided.

Hence, from the above it follows that there is a need in the art for a system for enabling a mixed reality experience, i.e. a system that is adapted to merge the physical world with a virtual-world to produce new environments and visualizations wherein physical and digital (virtual) objects can co-exist and interact in real-time.

### Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the invention to reduce or eliminate at least one of the drawbacks known in the prior art. In an aspect, the invention may relate to a method of processing location information by server system of a game system. The game system may be adapted to provide a location-based mixed-reality experience, the game system comprising a physical game space divided in game rooms and transporter simulators, each transporter simulator being configured to provide players wearing a mobile client device access to game rooms, the game rooms and the transport simulators comprising sensors, actuators and/or media players controlled by the server system, the server system and the mobile client devices being configured to determine a mixed-reality (MR) map representing the game rooms in a virtual-world and the position of at least one mobile client device on the MR map;

In an embodiment, the method may comprise: the server system updating the MR map on the basis of real-world location information of a mobile client device moving through a first game room, the real-world location information being determined by a positioning device in the mobile client device and wirelessly transmitted by the mobile client device to the server system; the server system receiving a request of the mobile client device to access a transport simulator connected to the first game room and to start a transport simulation process to provide the player wearing the client device a mixed reality experience of a transportation from the first game room through the virtual-world to a second game room; and, if the server system determines on the basis of the real-world location information that the mobile client device is located in the transport simulator, starting execution of the requested transport simulation process; the server system determining virtual-world location information representing the position of the client device in the virtual-world during the transport simulation from the first game room to the second game room and updating the mixed-reality map on the basis of virtual-world location information during the execution of the transport simulation process.

Hence, the game system according to the invention is configured as a distributed server network for controlling game rooms and transporters in a real-world physical game space. The transporters (transporter simulators) are adapted to execute a transport simulation process in which players are transported from one game room via the virtual world to another game room. The mobile client devices which are worn by players participating in a game provide real-world location information to the game server. Additionally, the game server receives virtual-world location information associated with client devices which are in a transport simulator that is executing a transport simulation process. The game server uses the real-world and virtual-world location information for updating a global mixed reality map including the location of all client devices on the MR map. The game server may use the location information in controlling the execution of simulation processes in the game rooms and the transports.

A mobile client device uses the real-world location information determined by a locating module in the client device and the virtual-world location information sent by a transporter server during the execution of a transport simulation process to the client device. The client device uses the real-world and virtual-world location information for updating a mixed reality map including the location of the client device on the MR map. Players are able to move around in the mixed-reality game world using the MR map which is visualized by client devices worn by the players.

In an embodiment, the method may further comprise: in response to the request of the client device, the server system checking the status of the transport simulator and the location of the client device and if the transport simulator is not executing a transport process and if the client device is located in the first game room, preferably within a predetermined distance of the gate that provides access to the transport simulator, the server system opening a gate in the first game room to a compartment of the transport simulator.

In an embodiment, determining virtual-world location information may further include: the server system receiving user interaction information of a user interacting with a user interface of the transport simulator; the server system determining the virtual-world location information on the basis of the user interaction information, the virtual-world location information comprising coordinates of the transporter in the virtual-world.

In an embodiment, the method may further comprise: updating the content playout of one or more media players in the transporter simulator and/or updating motion control of the transporter simulator, the updated content playout and/or motion control reflecting the coordinates of the transporter in the virtual-world.

In an embodiment, the transport simulator may comprise a compartment mounted on a motion platform, the compartment comprising at least one entrance gate for enabling a player to enter the transport simulator via the first game room and at least one exit gate for enabling a player to exit the simulator via the second game room which is different from the first game room, the first entrance gate and second exit gate being controlled by the server system.

In an embodiment, the transport simulator may be configured as a moving transport simulator, configured to move during the transport simulation from the first game room to the second game room, the moving transport simulator comprising at least one compartment comprising at least one gate for enabling a player to enter the simulator via the first game room and to exit the simulator via the second game room which is different from the first game room, the gate being controlled by the server system.

In an embodiment, the method may further comprise: the server system sending the locations of client devices in the updated MR map to a media display located in at least one of the one or more game rooms; the media display displaying the updated mixed-reality map, including the current locations of the mobile client devices on the MR map.

In an embodiment, the method may further comprise: the server system sending the virtual-world location information representing the position of the client device in the virtual game to the client device; the client device updating the MR map on the basis of the virtual-world location information during the execution of the transport simulation process; the client device displaying the updated mixed-reality map, including the current location of the mobile client device on the MR map.

In an embodiment, the server system may be configured as a distributed server network, comprising a game server and a network of game room servers configured to control game rooms and transporter servers configured to control transporter simulators, the game server being configured to orchestrate sequences of gaming events, a sequence of gaming events in time forming a storyline of a game, a gaming event including the execution by a transport server of a transport simulation process in a transport simulator.

In a further aspect, the invention may be related to a method of processing location information by mobile client devices of a game system, the game system adapted to provide a location-based mixed-reality experience, the game system comprising a physical game space divided in game rooms and transporter simulators, each transporter simulator being configured to provide players wearing a mobile client device access to game rooms, the game rooms and the transport simulators comprising sensors, actuators and/or media players controlled by a server system, the server system and the mobile client devices being configured to determine a mixed-reality (MR) map representing the game rooms in a virtual-world and the position of at least one mobile client device on the MR map.

In an embodiment, the method may include a mobile client device updating the MR map on the basis of real-world location information of the mobile client device moving through a first game room, the real-world location information being determined by a positioning device in the mobile client device, the mobile client device wirelessly transmitting the real-world location information to the server system; the mobile client device transmitting to the server system a request to access a transport simulator connected to the first game room and to start a transport simulation process to provide the player wearing the client device a mixed reality experience of a transportation from the first game room through the virtual-world to a second game room; and, after access the transporter simulator transmitting real-world location information to the game server for enabling the server system to determine that the mobile client device is located in the transport simulator and to start execution of the requested transport simulation process; a mobile client device updating the mixed-reality map on the basis of virtual-world location information during the execution of the transport simulation process, the virtual-world location information being wirelessly transmitted by the server system to the mobile client device, the virtual-world location information representing the position of the client device in the virtual-world during the transport simulation from the first game room to the second game room.

In a further aspect, the invention may relate to a server system adapted to provide a location-based mixed reality experience comprising: a computer readable storage medium having computer readable program code embodied therewith, and a processor, preferably a microprocessor, coupled to the computer readable storage medium, wherein responsive to executing the first computer readable program code, the processor is configured to perform executable operations comprising: the server system updating the MR map on the basis of real-world location information of a mobile client device moving through a first game room, the real-world location information being determined by a positioning device in the mobile client device and wirelessly transmitted by the mobile client device to the server system; the server system receiving a request of the mobile client device to access a transport simulator connected to the first game room and to start a transport simulation process to provide the player wearing the client device a mixed reality experience of a transportation from the first game room through the virtual-world to a second game room; and, if the server system determines on the basis of the real-world location information that the mobile client device is located in the transport simulator, starting execution of the requested transport simulation process; the server system determining virtual-world location information representing the position of the client device in the virtual-world during the transport simulation from the first game room to the second game room and updating the mixed-reality map on the basis of virtual-world location information during the execution of the transport simulation process.

The invention may also relate to a server system adapted to provide a location-based mixed reality experience, the server system being adapted to execute any of the method steps as described above.

In yet a further aspect, the invention may relate to a client device configured to provide a mixed reality experience comprising: a computer readable storage medium having computer readable program code embodied therewith, the program code including an encryption function of a homomorphic threshold cryptosystem, and a processor, preferably a microprocessor, coupled to the computer readable storage medium, wherein responsive to executing the first computer readable program code, the processor is configured to perform executable operations comprising: a mobile client device updating the MR map on the basis of real-world location information of the mobile client device moving through a first game room, the real-world location information being determined by a positioning device in the mobile client device, the mobile client device wirelessly transmitting the real-world location information to the server system; the mobile client device transmitting to the server system a request to access a transport simulator connected to the first game room and to start a transport simulation process to provide the player wearing the client device a mixed reality experience of a transportation from the first game room through the virtual-world to a second game room; and, after access the transporter simulator transmitting real-world location information to the game server for enabling the server system to determine that the mobile client device is located in the transport simulator and to start execution of the requested transport simulation process; a mobile client device updating the mixed-reality map on the basis of virtual-world location information during the execution of the transport simulation process, the virtual-world location information being wirelessly transmitted by the server system to the mobile client device, the virtual-world location information representing the position of the client device in the virtual-world during the transport simulation from the first game room to the second game room.

The inventio may also relate of a computer program product comprising software code portions configured for, when run in the memory of a computer, executing any of the method as described above.

The invention will be further illustrated with reference to the attached drawings, which schematically will show embodiments according to the invention. It will be understood that the invention is not in any way restricted to these specific embodiments.

### Brief description of the drawings

**Fig. 1** schematically depicts a game system for providing a location-based mixed-reality experience according to an embodiment of the invention;
**Fig. 2A** and **2B** depict the processing of the locations of the mobile client devices for the formation of a mixed-reality map according to an embodiment of the invention;
**Fig. 3A-3C** depict schematics of a layout of a physical game space and an associated-mixed reality map according to various embodiments of the invention.
**Fig. 4A-4C** depict a flow-chart of a method of providing a location-based mixed-reality experience according to an embodiment of the invention.
**Fig. 5** depicts a schematic of at least part of a game system for providing a location-based mixed-reality experience according to an embodiment of the invention.
**Fig. 6** depicts a schematic of at least part of a game system for providing a location-based mixed-reality experience according to another embodiment of the invention.
**Fig. 7** is a block diagram illustrating an exemplary data computing system that may be used for executing methods and software products described in this disclosure.

### Detailed description

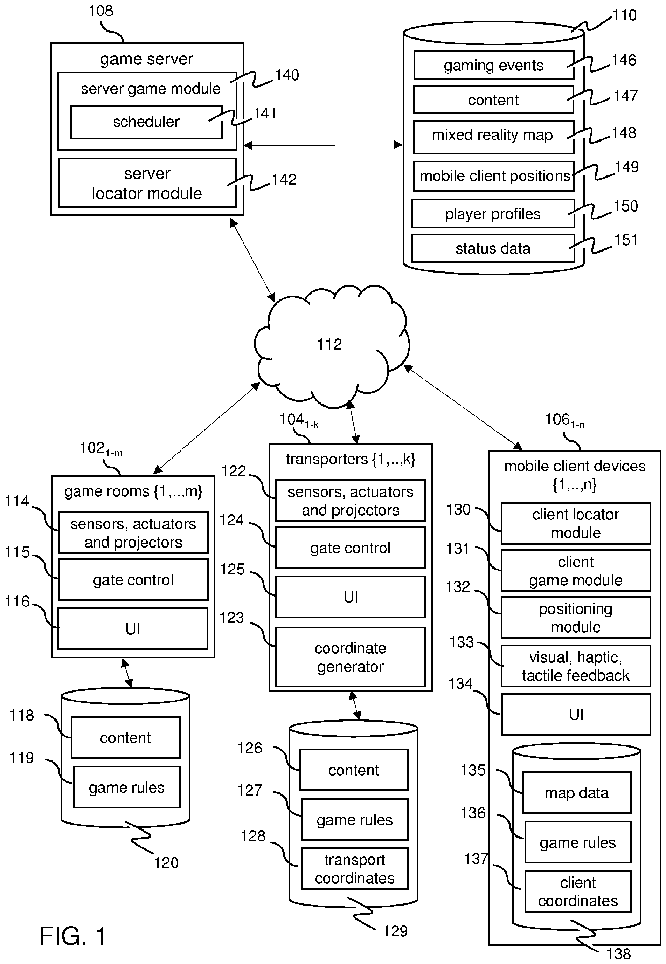

**Fig. 1** schematically depicts a game system for providing a location-based mixed-reality experience according to an embodiment of the invention. In particular, **Fig. 1** depicts a mixed-reality game system **100** in which a physically delimited real-world game space, e.g. a theme park or a gaming venue, is controlled by a decentralised server system, including a central orchestration server, game server **108,** connected to a network of local servers, including e.g. game room servers **102₁₋ₘ** and transporter servers **104₁₋ₖ.** As will be described hereunder in more detail, the decentralised server system is adapted to provide a mixed-reality experience to people participating in the game (players).

The real-world game space may be physically divided in different subspaces, which hereafter are referred to as game rooms. A game room may represent a 3D space that has boundaries and which comprise devices that are controlled by a game room server **102₁₋ₘ**. The game rooms are connected via one or more transporter simulators, i.e. static or moving transporter simulators, controlled by transporter servers **104₁₋ₖ**. Such transporter simulator may hereafter be referred to as a transporter. A player can use a transporter to exit one game room and to enter another game room. The servers may include interfaces **114,122** for controlling sensors, actuators and/or projectors in the game room and the transporters in order to provide visual, haptic and/or tactile effects during the execution of a gaming event. This way players are provided with a mixed-reality experience in which the physical game space and a virtual-world are merged. Such game space may be referred to as a mixed-reality game space.

Each player wears a mobile client device **106₁₋ₙ**, which comprises a positioning module **132** that is configured to determine the location of the mobile client device in the physical game space, e.g. a game room or a transporter. A wireless local area network (WLAN) **112** comprising access points (AP) in the game rooms and transporters may enable the mobile client devices to wirelessly communicate with the game server and the controllers. A player may use the mobile client device to access game rooms and transporters on the basis of a map of the mixed-reality world (in short a MR map). A mobile client device may display a MR map via a user interface **134** to a player. The client device may render the MR map on the basis of map data **135** that may be stored in the memory **138** of the client device. A positioning module **132** in the client device may continuously determine client position information **137** (e.g. real-world coordinates) of the client device in the game space and a client locator module **130** may use the position information in order to display the current position of the client device on the MR map. Additionally, the client locator module may transmit the client position information to a server locator module **142** in the game server, which is configured to monitor client coordinates of all client devices in the game space. The server locator module may generate and continuously update a MR map **148,** which may include the current positions of the mobile client devices in the MR world. These positions may be stored as coordinates in the database **110.**

The server system may send the locations of client devices in the updated MR map to a media playout device for displaying the updated mixed-reality map, including the current locations of the mobile client devices on the MR map that are located in game rooms, so that a player is able to determine locations of other client devices.

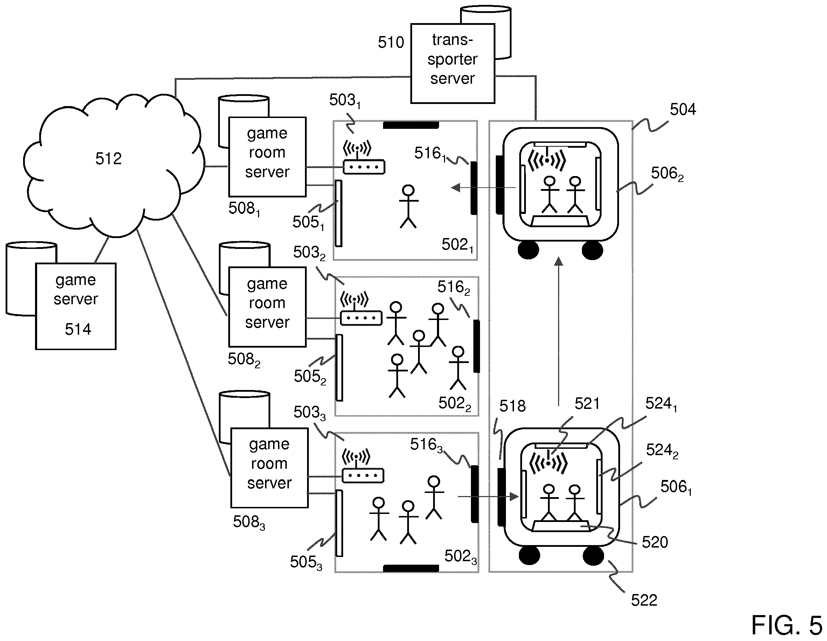

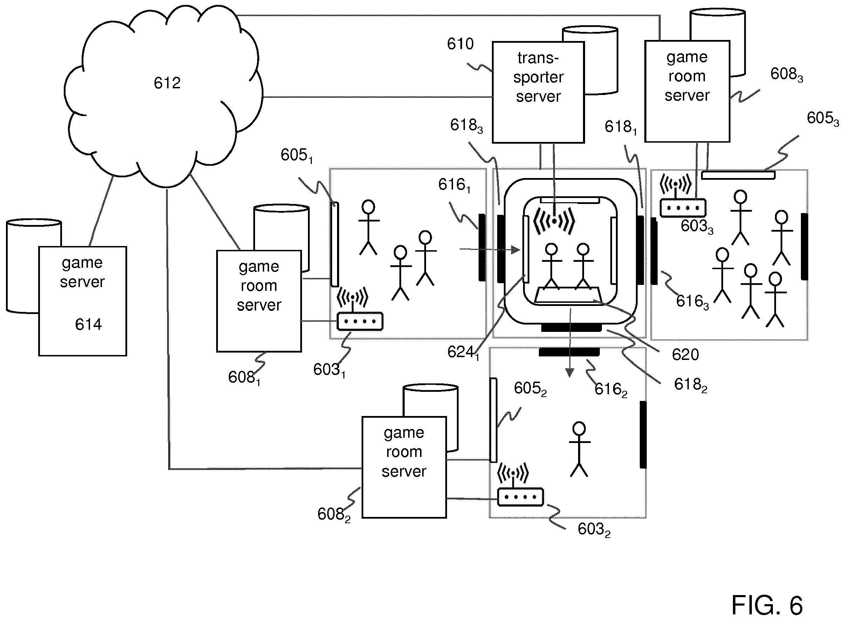

Additionally, the same server may store status information **151** about the game rooms and/or transporters in database **110.** For example, during updating of the MR map, the game server may continuously determining the number of players in game rooms and/or transporters. When the number of player in a game room exceeds a predetermined threshold, the game server may take measures to decrease the number of players in the game room by e.g. influencing transporter simulation processes which have this particular game room as a destination game room. Examples of such processes are described hereunder in more detail with reference to **Fig. 5** and **6****.** Other status data may include transporter status data indicating if a certain transport simulator is active or not.

The game server, the game room controllers and the transporter controllers may form a decentralized server system wherein the game server may orchestrate and schedule gaming events **146** that are executed locally by the game room servers and the transporter servers. Gaming events may be executed on the basis of a storyline (i.e. a logical sequence of gaming events in time that follow part of a story in the MR world) and on the basis of the position of the client devices in the MR world. Every game event that is scheduled by the game server and executed by a local server may include the activation of sensors, actuators and/or projectors or the control of gates in game rooms or transporters. Gaming events may for example include the execution of a transporter process in which players wearing client devices are transported from one game room to another game room, while the location of the players on the MR map are continuously updated locally by the client locator module and globally by the server locator module.

Each game event may be associated with its own content (audio-visual content) and game rules, i.e. conditions which may trigger certain audio-visual effects and/or motion effects and/or conditions which may determine when and how a player may interact with servers during the execution of a game event (e.g. interaction which may affect the execution of a transporter process). Content **118,126** and game rules **120,128** of a game event may be locally stored on a storage medium so that an interactive gaming events can be executed without delays. The decentralized network architecture of the mixed-reality system depicted in **Fig. 1****,** keeps the data traffic in the network low while delays in the audio, visual and motion effects are minimized.

Game rooms and transporters may be implemented according to a theme. Devices in the game room and the transporters providing the mixed-reality effects may include content projectors for providing visual effects, e.g. 2D and 3D media projectors, hologram projectors, etc.; audio effects, e.g. audio equipment for providing 3D immersed audio effects; and, 3D motion effects using e.g. actuators or motion platforms. A game room may comprise one or more electronic gates, e.g. electronic doors, for providing a player wearing a client device access to an entrance or exit of a transporter. A gate controller **118** in the game room server may be configured to open and close of the gates on the basis of sensor input and/or a player using its client device to access a transporter.

The game server may comprise a game module **140,** which is configured to orchestrate events in the physical game space and in the virtual-world that is linked to the physical game space. The game server may use a database **110** for storing information that is used for the game, e.g. game events **146.** Game rules associated with each game event that are stored with the local servers may determine conditions how players participate the game in the game space. The information may further comprise content **147,** e.g. audio-visual content for generating audio-visual effects and, optionally, information about motion movements associated with the content. The game module **140** in the game server may comprise a scheduler **141** for scheduling gaming events that are locally executed by the game room servers and the transporter servers on the basis of locally stored game rules and content.

The location-aware mobile client devices comprising the client locator module **130** and the positioning module **132** may be implemented as computing device including a processor and a memory which may be configured as a mobile game console that can be worn by a player. To that end, a client device may comprise a client game module that controls elements in the mobile client device when a gaming event is executed by one of the local servers, e.g. a game room server or a transporter server. Game rules **136** stored in the client device may determine the functionality of the client device. For example, during the execution of a transporter process, the game rules of the client device may activate certain functions, e.g. a camera for capturing pictures or video, a display means to visualize part the physical game world (e.g. as the field of view of the camera) and/or the virtual-world and/or one or more sensors, e.g. one or more accelerometers, that are adapted to transform certain movements of the mobile game console into certain actions in the virtual-world. In some embodiments, the client device may comprise an optical pointer, e.g. a laser device that can be used for selecting parts, e.g. virtual objects or physical objects in a game room. Alternatively, and/or in addition, the laser device may be used as a game weapon, e.g. for shooting virtual objects or physical objects in the game room. A user interface (UI) **138,** e.g. a touch-sensitive graphical user interface or a UI in the form of a head-mounted device, e.g. a wearable device such as Google glasses or the like, allows the servers to send messages, e.g. status messages or a selection menu, to a player or allows the player to send messages, e.g. requests or selections, to the servers. Further, the UI may display the messages or content (e.g. part of the virtual-world) to the player. The UI may be used by the player to send messages to a game room server or a transporter server, e.g. messages including a request to use a transporter or to inform a selection of different actions presented to the players via user interfaces **116,125** in the game rooms or transporters.

Each client device is associated with a client identifier ID, which may be used by the game server to identify and monitor client devices in the physical and virtual-world. The client identifiers and other information associated with the client devices that participate in the game may be stored in player profiles **149.** Information in the player profile may include information about the player, e.g. age, gender, home address, nationality, gaming score (current score and scoring history), player preferences, etc. The locator module of the server may determine the physical location of a client device in a game room using information of the wireless LAN connection, e.g. the address of different access points of the WLAN located in the game rooms.

The positioning module **132** in the client device may determine the position of the client device in different ways. In one embodiment, it may use information about different access points, e.g. Wi-Fi access points, to determine location information, which is subsequently send to the locator module of the game server system. In a further embodiment, the positioning module **132** may further include an RFID transceiver which can read RFID transponders that are installed at predetermined locations in the game room. RFID messages transmitted by the transponders and received by the RFID receiver in the client device may include location information that can be used for fast determination of a location of a client device in a game room or a transporter. In yet a further embodiment, when one or more game rooms are implemented as an outdoor space, location information may be provided using a GPS module in the client device. The client locator module may generate a MR map visualizing the game rooms and the virtual-world in which the game rooms are located. Further, it may visualize the current location of the client device in the MP map so that a player can follow its location in the MR world when he uses a transporter for moving from one game room to another game room. To that end, the client locator module may continuously translate coordinates of a player in a physical game room into corresponding coordinates in the virtual-world so that that the locator module is able to indicate the location of a player on the MR map. This way, the MR map allows players wearing a client device to find their way in the mixed-reality game space.

A player may access or exit a physical game room and an associated virtual game room using a transporter. In an embodiment, a transporter may be configured as a static transporter, e.g. a tunnel connecting one game room with another game room. In another embodiment, a transporter may be configured as a motion platform that is adapted to simulate a transportation, e.g. a car ride or a space flight, by moving actuators in combination with content projection. In yet another embodiment, a transporter may be configured as a moving transporter, e.g. a moving vehicle, which is configured to transport a player from a first game room to another game room. During transportation, the moving transporter may also be configured to simulate a transportation by moving actuators in combination with content projection so that player will have the impression that they experience e.g. a car ride or a space flight.

A gaming event scheduled by the server game module may include the execution of a transportation process wherein players are transported from one game room to another game room wherein during the transport the location of the client device on the MR map is continuously updated. Similar to a game rooms, a transporter may be associated with game rules **127** and audio-video content **126** which are stored on a storage medium that is connected to the transporter server. Sensors, actuators and/or projectors in a transporter may be controlled using appropriated interfaces **122.**

During the execution of a transportation process, the client devices in the transporter receive location information (e.g. coordinates) from the transporter server wherein the location information represents the current position of the transporter on the MR map. In one embodiment, coordinates **129** associated with the content that is displayed during the execution of the transporter is stored together with the content on the storage medium of the transporter server. In another embodiment, a player may interact with the transporter during the execution of the transporter process. For example, the transporter may be a motion platform that is configured as a flight simulator in which a player may navigate a space ship. After take-off, a player may use the user interface UI **125** of the transporter to navigate the "spaceship" via various routes to an end point. In that case, when the player may interact with the transporter via the navigation controls. Depending on the navigation of the player, different paths through the virtual-world may be selected wherein each path has its own coordinates in the virtual-world. The player interaction may affect different transportation parameters. For example, the player may also reduce the speed at which the transporter travels through the virtual-world. Hence, the user input may not affect the position in the virtual-world but also the speed at which it travels in the virtual-world. Hence, in an embodiment, user interaction may both affect the location in the virtual-world and the speed at which the location moves in the virtual-world. In that case, a coordinate generator **123** in the transporter server may generate a stream of coordinates representing the game path that is selected on the basis of the input, e.g. navigation control, of the player. The stream may be coordinates at regular time intervals so that the location, speed and, optionally, acceleration along the game path is known.

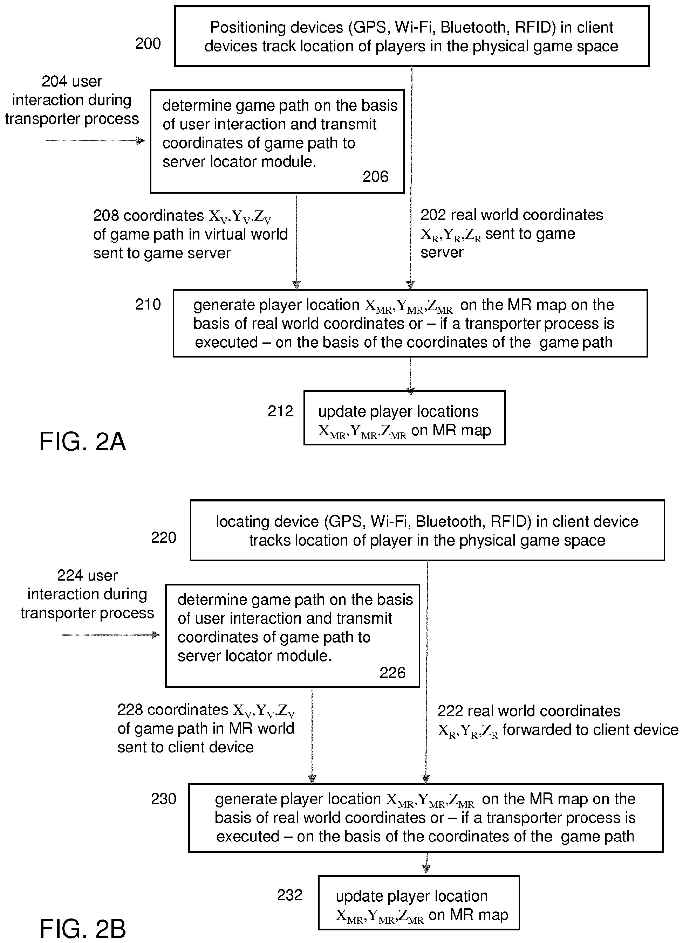

The processing of the locations of the mobile client devices for the formation of a MR map according to an embodiment of the invention is depicted in **Fig. 2A** and **2B** in greater detail. **Fig. 2A** depicts a process that is executed by the server location module which receives location information of positioning modules in client devices which track the location of the players wearing the client devices in the physical (real-world) game space using known location techniques based on Wi-Fi, Bluetooth, RFID and/or GPS (step **200**). These real-world coordinates may be sent by the client devices to the server locator module (step **202**). In case one or more players use a transporter, the server locator module may also receive virtual coordinates of a game path in the virtual-world from the transporter server. The virtual coordinates may be generated by a coordinate generator in the transporter server on the basis of the user interaction that is received (step 204). The generated virtual coordinates are in synchronization with the content that is played out during transportation process. The virtual coordinates may define a game path in the virtual-world (step **206**) and are sent to the server locator module (step **208**). For each client device, the server locator module may use the real world coordinates to generate a location on the MR map. If the server locator module receives for a particular client device also virtual coordinates, the locator module uses the virtual coordinates to generate a location on the MR map (step **210**). The thus generated MR coordinates are used by the server locator module to update locations of players on the MR map (step **212**).

**Fig. 2B** depicts a process that is executed by the client location module which receives location information of a positioning module in client device, which is configured to track the location of the player wearing the client device in the physical (real-world) game space using known location techniques based on Wi-Fi, Bluetooth, RFID and/or GPS (step **220**). These real-world coordinates may be sent by the client device to the server locator module (step **222**). In case the player is using a transporter, the client locator module may also receive virtual coordinates of a game path in the virtual-world from the transporter server. The virtual coordinates may be generated by a coordinate generator in the transporter server on the basis of the user interaction that is received (step **224**). The generated virtual coordinates are in synchronization with the content that is played out during transportation process. The virtual coordinates may define a game path in the virtual-world (step **226**) and are sent to the server locator module (step **228**). For each client device the server locator module may use the real world coordinates to generate a location on the MR map. If the client locator module receives also virtual coordinates, the client locator module uses the virtual coordinates to generate a location on the MR map (step **230**). The thus generated coordinates are used by the server locator module to update locations of players on the MR map (step **232**).

Hence, the game system according to the invention is configured as a distributed server network for controlling game rooms and transporters in a real-world physical game space. The transporters (transporter simulators) are adapted to execute a transport simulation process in which players are transported from one game room via the virtual world to another game room. The mobile client devices which are worn by players participating in a game provide real-world location information to the game server. Additionally, the game server receives virtual-world location information associated with client devices which are in a transport simulator that is executing a transport simulation process. The game server uses the real-world and virtual-world location information for updating a global mixed reality map including the location of all client devices on the MR map. The game server may use the location information in controlling the execution of simulation processes in the game rooms and the transports.

A mobile client device uses the real-world location information determined by a locating module in the client device and the virtual-world location information sent by a transporter server during the execution of a transport simulation process to the client device. The client device uses the real-world and virtual-world location information for updating a mixed reality map including the location of the client device on the MR map. Players are able to move around in the mixed-reality game world using the MR map which is visualized by client devices worn by the players.

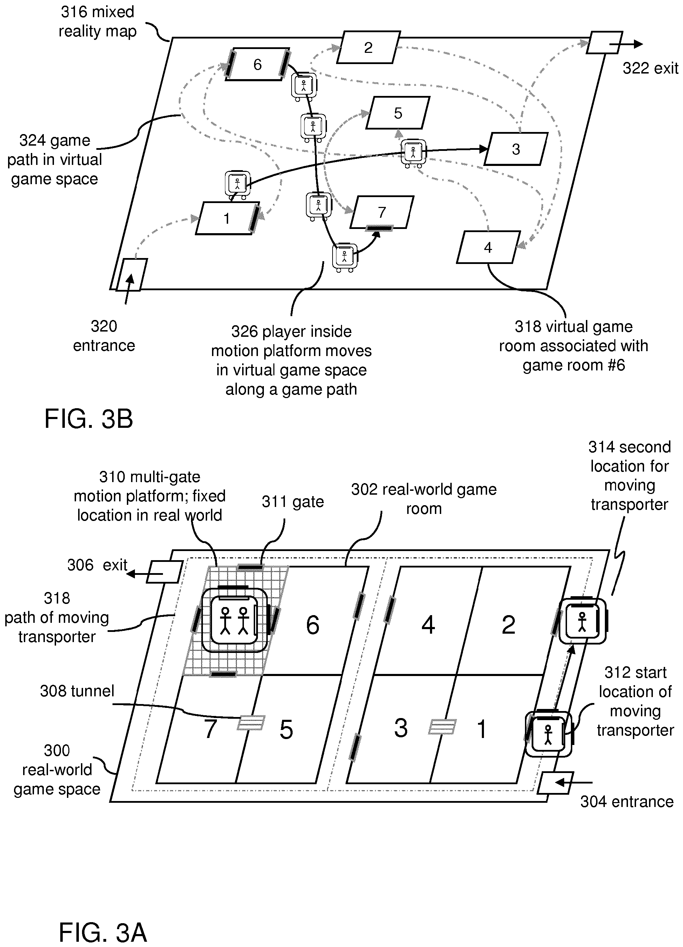

**Fig. 3A-3C** depict schematics of a layout of a physical (real-world) game space and an associated-mixed reality map according to various embodiments of the invention. In particular, **Fig. 3A** depicts the layout of a real-world game space **300** divided into game rooms **302** comprising sensors, actuators and content players controlled by a game room server (not shown). The game space may comprise an entrance **304,** an exit **306** and different types of transporters **308-312** connecting the different game rooms.

For example, in one embodiment, a transporter may be configured as a static transporter **308** controlled by a transporter server. Such static transporter may be implemented as a tunnel in which a player in a first game room (game room #5) can move to a second game room (game room #7). The walk-through transporter may include gates, an entrance gate and an exit gate controlled by the game server. When a player enters the static transporter content, e.g. 2D or 3D audio-visual content may be played out by a projector.

In a further embodiment, a transporter may be implemented as a moving transporter **312_{1,2}.** The moving transporter may be configured as a moving vehicle or the like, e.g. a train or an elevator, which may move along a transponder path **318** along one or more game rooms, which is controlled by a transporter server. The moving transporter may comprise at least one gate which can be opened to allow players in a first game room at a first location to enter the transporter and to allow - after the transport process in which the transporter has moved from the first location **312₁** to a second location **312₂** associated with a second game room - players to exit the transporter and to enter the second game room. When executing a transponder process, the moving vehicle may follow the transporter path. Hence, a game room, e.g. game room 1 in **Fig. 3A****,** may include a gate controlled by the game room server that gives access to the moving transporter. If a player enters the transporter, it may transport the player to one or more game rooms along the transporter path. For example, when entering the transporter, a player may select a game room and in response, the transporter server may use the game rules and the content for executing a transportation process.

In a further embodiment, a transporter may be implemented as a multi-gate motion platform **310** that is fixed at a certain location in the real-world game space. The platform may comprise a plurality of gates **224,** i.e. one or more gates for entering the platform and one or more gates to exit the platform. The motion platform may be configured to generate the effects of being in a moving vehicle. The platform server may control the actuators of the motion platform such that the movements are synchronous with the playback of content. The motion simulator may move the entire compartment and can convey changes in orientation and the effect of gravitational forces. The synchronized video, audio and motion provides the effect of immersion in a mixed reality world, i.e. a perception by a player of being physically present in a non-physical virtual-world. A player may interact with the motion platform during the execution of a transportation process. For example, the motion platform may include a navigation control allowing a player to navigate a vehicle, a space craft, a boat, or any other craft types through a virtual-world.

Players wearing client devices may move through the real-world game space **300** while the client locator modules and the server locator module continuously monitor the real-world position of the client devices in the real-world game space. If a player enters a transponder, a transporter process may be started by the transporter server, including the playout of audio-visual content and the transmission of coordinates to the server locator module wherein the coordinates represents the movements of the transporter along a game path in the virtual-world. The server locator module may continuously update the MR map **300,** which visualizes the mixed reality game space (and the players therein) that is linked and mixed with the real-world physical game world. As explained with reference to **Fig. 1****,** a client locator module in each client device also updates its MR map on the basis of the real-world coordinates generated by the positioning module in the client device or on the basis of the virtual-world coordinates which are generated during a transportation process and provided to the. The MR map **316** may indicate the location of the game rooms **318** in the virtual-world. Optionally, the map may also include an entrance **320** and an exit **322** to the virtual-world. Different game rooms may represent different worlds, cities or places, etc. in the virtual-world and may be part of a location-based multiplayer mixed reality game.

As shown in **Fig. 3B****,** during the execution of a transporter process (using e.g. a multi gate platform or a moving transporter as described with reference to **Fig. 3A**), the location of the transporter may follow different game paths **324,326** in the virtual-world connecting different game rooms in the virtual-world. During the execution of a game event that includes a transportation process, coordinates of a game path may be determined by the coordinate generator in the transporter taking into account user interaction (e.g. navigation control of a player in the transporter). The coordinates are forwarded to the server locator module and the client locator module for updating of the MR map. Further, based on the coordinates the transporter server may select different content files for playout. For example, if a player navigates the transporter via a first game path, it may use the coordinates to select associated content and if the player navigates the transporter to a second game path, it may use the coordinates associated with the second game path to fetch the associated content from the storage medium.

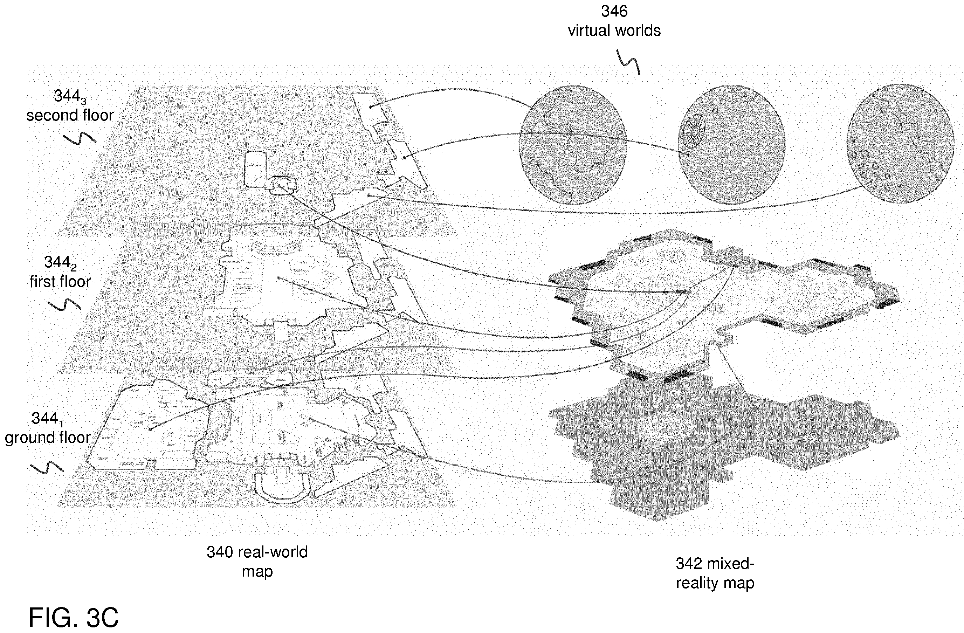

**Fig. 3C** depicts for example a real-world game space **340** including a venue comprising different floors **344**₁₋₃ comprising different game rooms connected with transporters in which players wearing client devices may participate in a game which is executed and controlled by a server system as described within this application. A map **342** of the mixed-reality world represents areas in the virtual world that correspond to the game rooms in the real-world. The lines indicate how certain games rooms have corresponding areas on the mixed reality map. As shown in this figure, while the real-world game space may be a limited space, the virtual world in which the game rooms are embedded may be vast covering e.g. different planets, different cites or areas.

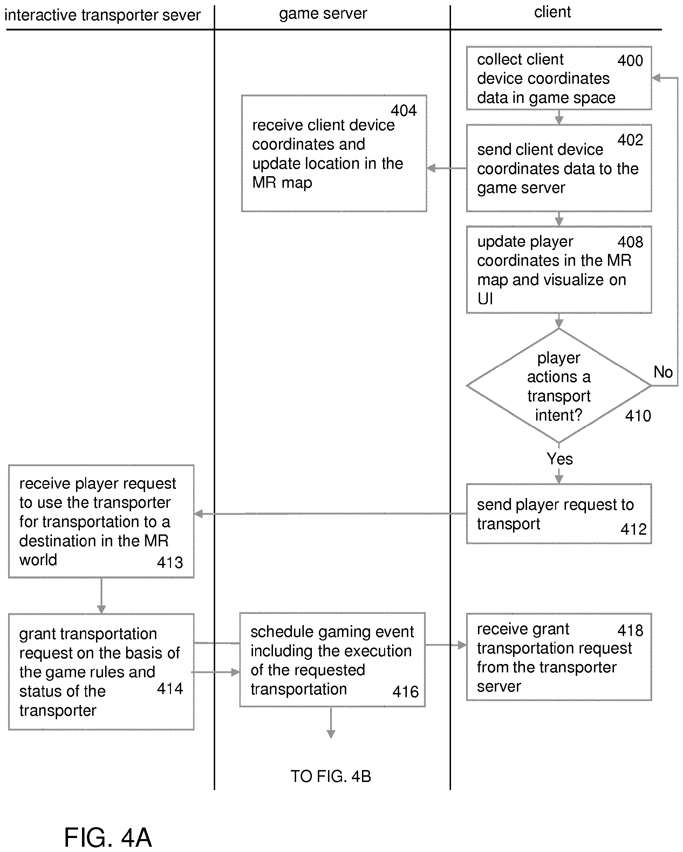

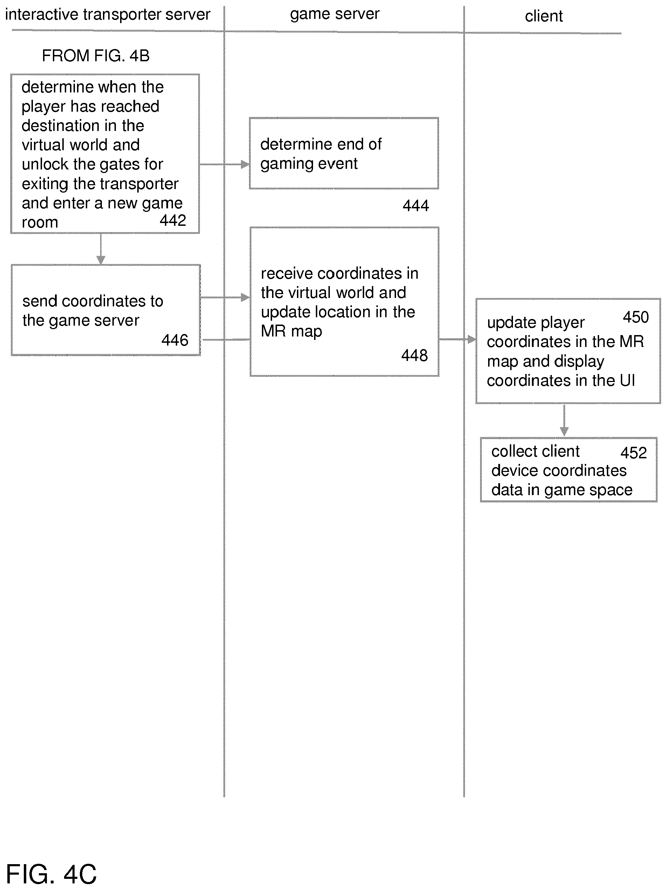

**Fig. 4A-4C** depict a flow-chart of a method of providing a location-based mixed-reality experience according to an embodiment of the invention. In particular, **Fig. 4A-4C** depict flow charts of a method of providing a mixed reality experience to users of client devices that are transported by a transporter. The flow chart start with **Fig. 4A** wherein in a first step **400** a positioning module in the client device may determine its coordinates in the real-world and send the coordinates to the server locator module in the game server (step **402**). The server locator module may receive the real-world coordinate and determine the location of the client device in the MR map. Based on the updated location, the server locator module may update the MR map (step **404**). Further, the client locator module may use the real-world coordinates to update the location of the client device in the MR map so that the current position of the player in the MR world can be shown to the play via the user interface (step **408**). The client device monitor requests from the user for starting a transportation process (step **410**). If the client device does not receive any indication, it may continue updating its position in the MR map on the basis of the coordinates in the real world as described with reference to steps **402-408** above.

If the user interacts with the client device and requests to start a transport process, it may send a request message to the transporter server (step **412**). The request may include a destination which may be visible in the MR map. The transporter server may receive the request (step **413**) and use the game rules and other contextual information (e.g. the status of the transporter) in order to determine if the request can be granted. During this process, the client device may continue updating its current location in the MR map using the steps as described above.

If the transporter server determines that the request of the client device can be granted (step **414**), it may send the grant to the gaming module, which in response may schedule a gaming event which includes the execution of the requested transportation (step **416**) to a destination on the MR map. Further, the transporter server may notify the client device that the request for transportation was granted (step **418**).

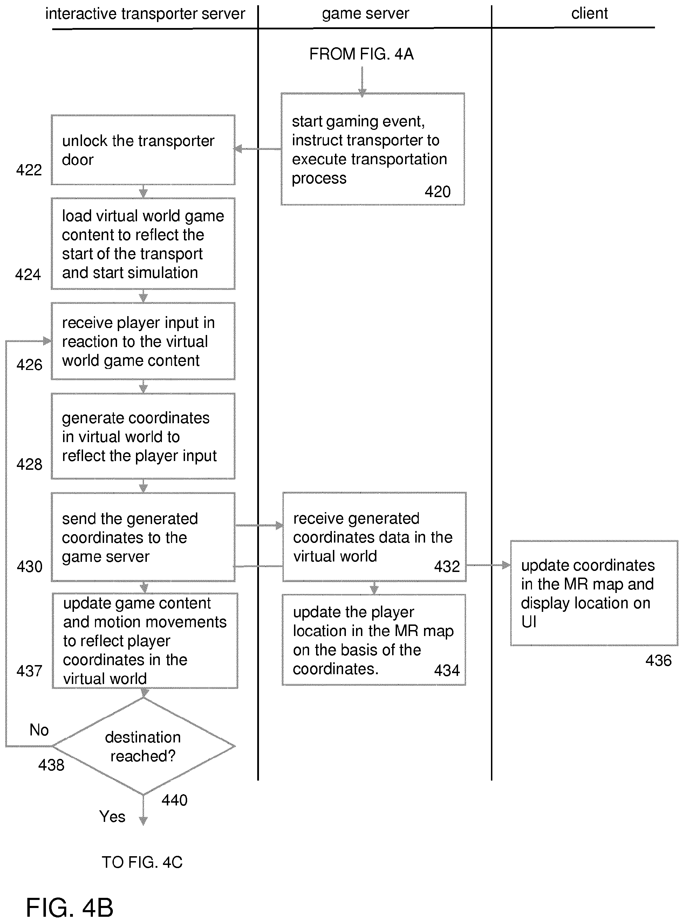

The flow chart continues in **Fig. 4B** wherein the gaming module in the game server may start the gaming event by instructing the transporter server to execute the transportation process (step **420**). In response, the transporter server may unlock the transporter door (step **422**) so that players can enter the transporter. Further, it may load virtual world content which reflects the start of transportation from a first game room to a destination, i.e. a second game room and start the simulation (step **424**).

The transporter process is an interactive transporter process wherein players can interact with a UI in reaction to the virtual content that is played out. Hence, the transporter server may receive player input in reaction to the projected content (step **426**). Typically, the player input may be in the form of navigation information which may influence parameters of the transportation process, e.g. the coordinates of the transporter in virtual-world (e.g. because a different game path has been selected by the player) or the speed or the acceleration of the transporter in the virtual-world (e.g. because the player has slowed down the speed at which the transporter travels in the virtual-world). The coordinate generator in the transporter server may generate a stream of coordinates representing location, speed and acceleration during the transportation process (step **428**).

The generated coordinates may be sent to the server locator module (step **430**) which may receive the coordinates (step **432**) and update the location on the MR map on the basis of these coordinates (step **434**). Similarly, the generated coordinates may be sent to the client device which uses the coordinates to update its location in the MR map (step **436**).

Further, in response to the player input the transporter server may update the game content and/or the motion movements. For example, if the player input changed the direction and speed of the transporter in the virtual-world, the content and the motion movements are updated by the transporter controller in order to reflect the changes due to the player input (step **427**). The process steps **436-437** are repeated until the transporter has reached the destination on the MR map (steps **438** and **440**).

Once the transporter server has determined that the transporter has reached the destination on the MR map, it may unlock the gates for exiting the transporter and for entering a new game room (step **442**). The transporter server may notify the gaming server that the transportation process has been ended. In response, the gaming module may determine that the gaming event associated with the transportation has ended (step **444**) and that a new gaming event on the story line can be scheduled. At the end of the transportation process, the transporter server may send the last coordinates to the server locator module and the client locator module (step **446-450**) so that these modules may update the MR map. Thereafter, the positioning module in the client device may continue determining its real-world coordinates (step **452**) for updating the MR maps by the client and server locator modules.

**Fig. 5** depicts a schematic of at least part of a game system for providing a location-based mixed-reality experience according to an embodiment of the invention. The system comprises a plurality of game rooms **502**₁₋₃ controlled by game room servers **508₁₋₃** and a moving transporter simulator system **504** controlled by a transporter server **510,** which is configured to transport players through the virtual world from a first game room to a second game room. The game rooms servers and the transporter server being connected by a data communication infrastructure **512,** which may e.g. include the Internet, to a game server **514.** The game rooms servers, the transporter server and the game server form a distributed server network, wherein the game server orchestrates gaming events that are executed by the game room and transporter servers as e.g. described with reference to **Fig. 1****.** The game rooms and transporters may comprise players wearing mobile client devices (not shown) are wirelessly connected to the distributed server network. For example, each game room may comprise one or more WLAN access points **503**₁₋₃ and game room sensors, actuators and/or media players **505**₁₋₃**.** Each game room may further comprise one or more gates **516**₁₋₃, which are controlled by the game room server. As described with reference to **Fig. 1****,** mobile client devices are configured to determine real-world location information, e.g. coordinates which represent the location of the player wearing a mobile client device in the physical game world.

On the basis of the real-world location information and virtual-world location information generated by a transporter server during the execution of a transport simulation process, a mixed-reality map may be generated by each mobile client device. The game server may use the real-world and virtual-world location information of all mobile client devices in order to generate a mixed-reality map including the position of all mobile client devices. Based on the read-world location information the server system is able to determine the number of players in each room and each the number of players in each transporter simulator.

The moving transporter simulator system may include a moving transporter simulator compartment (e.g. transporter simulator compartment **506₁** at a first location and the transponder simulation compartment **506₂** at a second location) including a WLAN access point **521** for wirelessly connecting mobile client devices of players inside the transporter simulator. The transporter server may control the sensors, actuators and/or media players **524,** a transporter gate **518** and a motion platform **520** of the transporter simulator. During the execution of the transportation process, the driving mechanism **522** may move the transporter simulator compartment from a first position at a first game room **506₃** to a second position at a second game room **506₁**.

In the embodiment of **Fig. 5****,** the transporter simulator is moving. Hence, in this case, the transporter simulator compartment may comprise one gate in order to allow players from a first game room to enter and in order to allow the players after execution of the transport simulation process to exit the simulator and to access a second game room. In another embodiment, transporter simulator is fixed but nevertheless allows access to different destination game rooms. An embodiment, of a game system comprising such transport simulator is depicted in **Fig. 6****.** This embodiment, includes the same or similar elements as the system depicted in **Fig. 5****,** i.e. game rooms **602₁₋₃** comprising gates, WLAN access points and game room sensors, actuators and/or media players controlled by game room servers **608₁₋₃;** a fixed transporter simulator system **604** including a motion platform, a WLAN access point and transporter sensors, actuators and/or media players controlled by a transporter server **510,** a data communication infrastructure **612** and a game server **614** for orchestrating gaming events executed by the game room servers and the transporter servers.

In this particular embodiment, the transporter simulator compartment comprises multiple (at least two) gates **618₁₋₃**, at least one gate for entering the transporter simulator compartment (e.g. gate **618₁**) and one or more gates for leaving the transporter simulator compartment e.g. gates **618₂** and **618₃**) entering a game room which is the destination of the transporter simulation process.

Part of the sensors in the transporter simulator compartment of the transporter simulator systems depicted in **Fig. 5** and **6** may be configured as a user interface, allowing players to interact with the transporter. For example, user interaction may include a player handling a navigation controller and/or a UI adapted to modify of a destination so that a player can influence the transportation simulation process at the start of its execution or during its execution.

Depending on the user interaction with the user interface a transport simulation process is executed that will result in a transport through the virtual world to a first game room **502₂** or to a second game room **502₂**. The transporter server may update the game content and/or the motion movements of the motion platform in accordance with a predetermined user interaction. For example, if the player input changes the end-destination, the transporter server may select media files associated with the newly selected destination and update the content playout and the motion movements in order to reflect the changes due to the player input.

In order to improve the user experience, in a typical transport simulation process, the content playout of the transporter simulator is adapted to the real-world game rooms that are used as start and destination locations of the transport simulation process. In particular, upon entering a transporter, the start of the content playout reflects the audio-visual experience of the game room from which the players entered the simulator. Similarly, when exiting the transporter, the end of the of the content playout reflects the audio-visual experience of the game room which the players will enter when leaving the simulator.

Instead of and/or in addition to the player interaction, the transport simulation process that is executed by the transporter server in the game systems of **Fig. 1****,** **5** and **6** may also be influenced by other parameters. For example, in one embodiment, the game server may use the number of client devices in game rooms and/or the number of client devices in transporter simulators in order to determine the destination of a transport simulation process. This way, the game server may use the number of client devices in game rooms in order to control the movement of players through the game rooms. If the number of players in a particular game room is larger than a certain threshold value, the game server may change the destination of the transport simulation process so that the number of players in game rooms can be controlled. Hence, in an embodiment, during the updating process of the MR map, the game server may monitor the number of players in each game room and, optionally, in each transporter and check if the number of players in each game room, and optionally, transporter exceeds a certain threshold value. Different threshold values may be assigned to different game rooms and transporters. If during a transporter simulation process, the game room determines the number of players in the destination game room exceeds the threshold value, it may change the destination game room into another destination game room that is associated with the transporter.

This way, the game server may use the updated mixed-reality map, including the locations of mobile client devices therein, as a means for crowd control. This process may be executed without informing the players about the real reason for the destination change.

For example, if the game server determines that the destination game room of a particular transport simulation process comprises too many players, the game server may instruct a transport simulator to execute a game event, which changes the destination of the transport simulation process. A game event may for example be executed wherein a malfunctioning of the simulated transporter, e.g. a space ship, is simulated so that players to provide the players the experience that a change of destination, e.g. an emergency landing, is necessary. In another example, bad weather in the virtual world may be simulated in order to provide the players the experience that a change in destination is necessary.

In other embodiments, other parameters associated with the players may be used to change the destination and/or the mixed-reality experience as well. To that end, in one embodiment, the game server may use information stored in the player profiles. For example, a destination or a mixed-reality experience may be selected by the game server on the basis of information of players that participate in the transporter simulation process, e.g.: age of the player, game score of the player, player preferences, etc. Hence, on the basis of the player information, the game server may provide players a personized location-based mixed-reality experience.

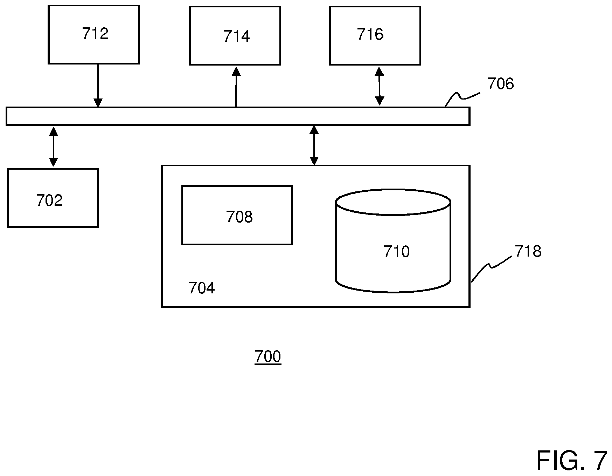

**Fig. 7** is a block diagram illustrating exemplary data processing systems described in this disclosure. Data processing system **700** may include at least one processor **702** coupled to memory elements **704** through a system bus **706.** As such, the data processing system may store program code within memory elements **704.** Further, processor **702** may execute the program code accessed from memory elements **704** via system bus 706. In one aspect, data processing system may be implemented as a computer that is suitable for storing and/or executing program code. It should be appreciated, however, that data processing system **700** may be implemented in the form of any system including a processor and memory that is capable of performing the functions described within this specification.

Memory elements **704** may include one or more physical memory devices such as, for example, local memory **708** and one or more bulk storage devices **710.** Local memory may refer to random access memory or other non-persistent memory device(s) generally used during actual execution of the program code. A bulk storage device may be implemented as a hard drive or other persistent data storage device. The processing system **700** may also include one or more cache memories (not shown) that provide temporary storage of at least some program code in order to reduce the number of times program code must be retrieved from bulk storage device **710** during execution.

Input/output (I/O) devices depicted as input device **712** and output device **714** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **716** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **750.**

As pictured in **FIG. 7****,** memory elements **704** may store an application **718.** It should be appreciated that data processing system **700** may further execute an operating system (not shown) that can facilitate execution of the application. Application, being implemented in the form of executable program code, can be executed by data processing system **700,** e.g., by processor **702.** Responsive to executing application, data processing system may be configured to perform one or more operations to be described herein in further detail.

In one aspect, for example, data processing system **700** may represent a client data processing system, e.g.. In that case, application **718** may represent a client application that, when executed, configures data processing system **700** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **718,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A method of processing location information by server system of a game system, the game system being adapted to provide a location-based mixed-reality experience, the game system comprising a physical game space divided in game rooms and transporter simulators, each transporter simulator being configured to provide players wearing a mobile client device access to game rooms,
the game rooms and the transport simulators comprising sensors, actuators and/or media players controlled by the server system, the server system and the mobile client devices being configured to determine a mixed-reality (MR) map representing the game rooms in a virtual-world and the position of at least one mobile client device on the MR map; the method comprising:
the server system updating the MR map on the basis of real-world location information of a mobile client device moving through a first game room, the real-world location information being determined by a positioning device in the mobile client device and wirelessly transmitted by the mobile client device to the server system;
the server system receiving a request of the mobile client device to access a transport simulator connected to the first game room and to start a transport simulation process to provide the player wearing the client device a mixed reality experience of a transportation from the first game room through the virtual-world to a second game room; and, if the server system determines on the basis of the real-world location information that the mobile client device is located in the transport simulator, starting execution of the requested transport simulation process;
the server system determining virtual-world location information representing the position of the client device in the virtual-world during the transport simulation from the first game room to the second game room and updating the mixed-reality map on the basis of virtual-world location information during the execution of the transport simulation process.

2. Method according to claim 1 wherein the method further comprises:
in response to the request of the client device, the server system checking the status of the transport simulator and the location of the client device and if the client device is located in the first game room, preferably in the first game room within a predetermined distance of the gate that provides access to the transport simulator, the server system opening a gate in the first game room to a compartment of the transport simulator.

3. Method according to claims 1 or 2 wherein determining virtual-world location information further includes:
the server system receiving user interaction information of a user interacting with a user interface of the transport simulator;
the server system determining the virtual-world location information on the basis of the user interaction information, the virtual-world location information comprising coordinates of the transporter in the virtual-world.

4. Method according to claim 3 further comprising:
updating the content playout of one or more media playout devices in the transporter simulator and/or updating motion control of the transporter simulator, the updated content playout and/or motion control reflecting the coordinates of the transporter in the virtual-world.

5. Method according to any of claims 1-4 wherein the transport simulator comprises a compartment mounted on a motion platform, the compartment comprising at least one entrance gate for enabling a player to enter the transport simulator via the first game room and at least one exit gate for enabling a player to exit the simulator via the second game room which is different from the first game room, the first entrance gate and second exit gate being controlled by the server system.

6. Method according to any of claims 1-4 wherein the transport simulator is configured as a moving transport simulator, configured to move during the transport simulation from the first game room to the second game room, the moving transport simulator comprising at least one compartment comprising at least one gate for enabling a player to enter the simulator via the first game room and to exit the simulator via the second game room which is different from the first game room, the gate being controlled by the server system.

7. Method according to any of claims 1-6 further comprising:
the server system sending the locations of client devices in the updated MR map to a media playout device located in at least one of the one or more game rooms;
the media display displaying the updated mixed-reality map, including the current locations of the mobile client devices on the MR map.

8. Method according to any of claims 1-7 further comprising:
the server system sending the virtual-world location information representing the position of the client device in the virtual game to the client device;
the client device updating the MR map on the basis of the virtual-world location information during the execution of the transport simulation process;
the client device displaying the updated mixed-reality map, including the current location of the mobile client device on the MR map.

9. Method according to any of claims 1-8 wherein the server system is configured as a distributed server network, comprising a game server and a network of game room servers configured to control game rooms and transporter servers configured to control transporter simulators, the game server being configured to orchestrate sequences of gaming events, a sequence of gaming events in time forming a storyline of a game, a gaming event including the execution by a transport server of a transport simulation process in a transport simulator.

10. A method of processing location information by mobile client devices of a game system, the game system adapted to provide a location-based mixed-reality experience, the game system comprising a physical game space divided in game rooms and transporter simulators, each transporter simulator being configured to provide players wearing a mobile client device access to game rooms,
the game rooms and the transport simulators comprising sensors, actuators and/or media players controlled by a server system, the server system and the mobile client devices being configured to determine a mixed-reality (MR) map representing the game rooms in a virtual-world and the position of at least one mobile client device on the MR map; the method comprising:
a mobile client device updating the MR map on the basis of real-world location information of the mobile client device moving through a first game room, the real-world location information being determined by a positioning device in the mobile client device, the mobile client device wirelessly transmitting the real-world location information to the server system;
the mobile client device transmitting to the server system a request to access a transport simulator connected to the first game room and to start a transport simulation process to provide the player wearing the client device a mixed reality experience of a transportation from the first game room through the virtual-world to a second game room; and, after access the transporter simulator transmitting real-world location information to the game server for enabling the server system to determine that the mobile client device is located in the transport simulator and to start execution of the requested transport simulation process;
a mobile client device updating the mixed-reality map on the basis of virtual-world location information during the execution of the transport simulation process, the virtual-world location information being wirelessly transmitted by the server system to the mobile client device, the virtual-world location information representing the position of the client device in the virtual-world during the transport simulation from the first game room to the second game room.

11. A server system adapted to provide a location-based mixed reality experience comprising:
a computer readable storage medium having computer readable program code embodied therewith, and a processor, preferably a microprocessor, coupled to the computer readable storage medium, wherein responsive to executing the first computer readable program code, the processor is configured to perform executable operations comprising:
the server system updating the MR map on the basis of real-world location information of a mobile client device moving through a first game room, the real-world location information being determined by a positioning device in the mobile client device and wirelessly transmitted by the mobile client device to the server system;
the server system receiving a request of the mobile client device to access a transport simulator connected to the first game room and to start a transport simulation process to provide the player wearing the client device a mixed reality experience of a transportation from the first game room through the virtual-world to a second game room; and, if the server system determines on the basis of the real-world location information that the mobile client device is located in the transport simulator, starting execution of the requested transport simulation process;
the server system determining virtual-world location information representing the position of the client device in the virtual-world during the transport simulation from the first game room to the second game room and updating the mixed-reality map on the basis of virtual-world location information during the execution of the transport simulation process.

12. A server system adapted to provide a location-based mixed reality experience, the server system being adapted to executed any of the method steps according to claims 1-9.

13. A client device configured to provide a mixed reality experience comprising:
a computer readable storage medium having computer readable program code embodied therewith, the program code including an encryption function of a homomorphic threshold cryptosystem, and a processor, preferably a microprocessor, coupled to the computer readable storage medium, wherein responsive to executing the first computer readable program code, the processor is configured to perform executable operations comprising:
a mobile client device updating the MR map on the basis of real-world location information of the mobile client device moving through a first game room, the real-world location information being determined by a positioning device in the mobile client device, the mobile client device wirelessly transmitting the real-world location information to the server system;
the mobile client device transmitting to the server system a request to access a transport simulator connected to the first game room and to start a transport simulation process to provide the player wearing the client device a mixed reality experience of a transportation from the first game room through the virtual-world to a second game room; and, after access the transporter simulator transmitting real-world location information to the game server for enabling the server system to determine that the mobile client device is located in the transport simulator and to start execution of the requested transport simulation process;
a mobile client device updating the mixed-reality map on the basis of virtual-world location information during the execution of the transport simulation process, the virtual-world location information being wirelessly transmitted by the server system to the mobile client device, the virtual-world location information representing the position of the client device in the virtual-world during the transport simulation from the first game room to the second game room.

14. Computer program product comprising software code portions configured for, when run in the memory of a computer, executing the method steps according to any of claims 1-10.
